# EUROPÄISCHE PATENTANMELDUNG

(11) **EP 3 231 665 A1**
(43) Veröffentlichungstag der Anmeldung: **18.10.2017**
(21) Anmeldenummer: 17162949.6
(22) Anmeldetag: 27.03.2017
(51) Int. Cl.: B60N 2/68, B60N 2/24, B60N 2/42

(54) **VORRICHTUNG ZUR ANBRINGUNG EINES SICHERHEITSGURTSYSTEMS**

(30) Priorität: 13.04.2016 DE 102016106794
(71) Anmelder: AGUTI PRODUKTENTWICKLUNG & DESIGN GMBH, 88085 Langenargen (DE)
(72) Erfinder: Grieger, Andreas, 88079 Kressbronn (DE)
(74) Vertreter: Otten, Roth, Dobler & Partner mbB Patentanwälte

(57) **Zusammenfassung**

Vorrichtung zur Anbringung eines Sicherheitsgurtsystems, insbesondere eines Dreipunktgurt-Sicherheitssystems, für einen Sitz in einem Verkehrsmittel, insbesondere in einem Wohnmobil, wobei die Vorrichtung mindestens ein hinteres Gestellbein umfasst, welches sich im angeordneten Zustand am Verkehrsmittel von einer Grundplatte in vertikaler Richtung nach oben erstreckt und wobei die Vorrichtung zumindest ein vorderes Gestellbein aufweist, welches das zumindest eine hintere Gestellbein abstützt. Die Erfindung kennzeichnet sich dadurch, dass zwei vordere Gestellbeine vorgesehen sind, deren Abstand zueinander sich ausgehend von dem hinteren Gestellbein in einer Richtung nach vorne vergrößert.

## Beschreibung

Die Erfindung betrifft eine Vorrichtung zum Anbringen eines Sicherheitsgurtsystems, insbesondere eines Dreipunktgurt-Sicherheitssystems, für einen Sitz in einem Verkehrsmittel, insbesondere in einem Wohnmobil, sowie einen Fahrzeugsitz und ein Verkehrsmittel mit einer solchen Vorrichtung.

### Stand der Technik

Vorrichtungen zur Anbringung eines Sicherheitsgurtsystems, insbesondere eines Dreipunktgurt-Sicherheitssystems, für einen Sitz in einem Verkehrsmittel sind bekannt. Die Vorrichtungen sind insbesondere als Einbauten auf Basis von rahmenartigen Gestellen ausgebildet, die mit Profilen aus Stahl oder anderen Materialien gebildet sind. In Fahrzeugen werden beispielsweise solche Vorrichtungen zum Anbringen von Sicherheitsgurt-Anordnungen eingesetzt, um eine in einem Fahrzeugsitz sitzende Person mit dem Sicherheitsgurtsystem zu sichern. Die Vorrichtung ist für im Fahrzeug auftretende Belastungsfälle ausgelegt, welche insbesondere Unfallszenarien zum Beispiel im Straßenverkehr betreffen.

Die betreffende Vorrichtung muss für die möglichen bzw. insbesondere für gemäß einer Maximalauslegung auftretenden

Belastungen ausgelegt und ausreichend mechanisch stabil sein, wobei dies auf eine Situation mit einer Person bezogen ist, welche mit einer an der Vorrichtung angeordneten Sicherheitsgurtanordnung an einem entsprechenden Sitz des Verkehrsmittels sicherbar ist. Die Vorrichtung ist demgemäß insbesondere an einem Sitz des Verkehrsmittels bzw. innerhalb dessen integriert vorhanden.

Bei einer bekannten Vorrichtung zur Anbringung eines Sicherheitsgurtsystems ist ein unterer Vertikalabschnitt der Vorrichtung mit einer flächigen bzw. rahmenartigen Grundplatte, zum Beispiel einer Bodenplatte des Verkehrsmittels verbindbar. Zur Stabilisierung der Vorrichtung ist weiter wenigstens eine schräg verlaufende Strebe zwischen einem vorderen Bereich der Grundplatte und einem oberen Bereich des dahinter ausgebildeten unteren Vertikalabschnitts der Vorrichtung vorhanden.

Hierdurch ist unter anderem ein möglicher Stauraum unterhalb einer Sitzfläche des Fahrzeugsitzes, an welchem die Vorrichtung vorhanden ist, nur eingeschränkt nutzbar.

### Aufgabe und Vorteile der Erfindung

Der Erfindung liegt die Aufgabe zu Grunde, eine alternative Vorrichtung zur Anbringung eines Sicherheitsgurtsystems bereitzustellen.

Diese Aufgabe wird durch die Merkmale der unabhängigen Ansprüche gelöst.

In den abhängigen Ansprüchen sind vorteilhafte und zweckmäßige Ausführungsformen der Erfindung angegeben.

Die Erfindung geht von einer Vorrichtung zur Anbringung eines Sicherheitsgurtsystems, insbesondere eines Dreipunktgurt-Sicherheitssystems, für einen Sitz in einem Verkehrsmittel, insbesondere in einem Wohnmobil aus, wobei die Vorrichtung mindestens ein hinteres Gestellbein umfasst, welches sich im angeordneten Zustand am Verkehrsmittel von einer Grundplatte in vertikaler Richtung nach oben erstreckt und wobei die Vorrichtung zumindest ein vorderes Gestellbein aufweist, welches das zumindest eine hintere Gestellbein abstützt.

Die Formulierung hinteres und vorderes Gestellbein bezieht sich auf die Sitzrichtung eines mit dem Gestell aufgebauten Sitzes. Insbesondere ist vorne in Fahrtrichtung eines Verkehrsmittels, in welchem das Gestell angeordnet ist zu sehen.

Ein Mehrpunktgurt-Sicherheitssystem, insbesondere ein Dreipunktgurt-Sicherheitssystem umfasst zum Beispiel folgende Komponenten: Ein, an einem ersten Ende eines Gurts angreifenden Gurtaufroller, eine Gurtumlenkenanordnung bzw. einen Gurtumlenker zur Richtungsänderung des daran vorbeigeführten Gurts, eine Fixierung für ein zweites Gurtende und ein Gurtschloss, mit dem eine Stellung, an welcher der als Schlaufe ausgezogene Gurt angreift, fixierbar ist. Vorteilhafterweise ist die Vorrichtung dazu ausgestaltet, alle Komponenten des Sicherheitsgurtsystems anzuordnen.

Vorteilhafterweise ist die Vorrichtung dazu vorgesehen in einem hinteren Bereich des Verkehrsmittels angeordnet zu werden.

Der wesentliche Aspekt der Erfindung ist nun darin zu sehen, dass zwei vordere Gestellbeine vorgesehen sind, deren Abstand zueinander sich ausgehend von dem hinteren Gestellbein in einer Richtung nach vorne vergrößert.

Hierdurch lässt sich die Vorrichtung ineinander stellen, insbesondere stapeln.

Vorteilhafterweise ist die Vorrichtung derart ausgestaltet, dass mindestens zwölf Vorrichtungen auf einer Euro-Palette stapelbar sind. Hierdurch sind Transportkosten der Vorrichtung vergleichsweise kostengünstig.

Beispielsweise ist das hintere Gestellbein säulenartig ausgeformt und umfasst wenigstens einen vertikalen Abschnitt. Der vertikale Abschnitt des hinteren Gestellbeins ist zum Beispiel an einem ersten Ende im montierten Zustand im Verkehrsmittel an der Grundplatte zum Beispiel einer Bodenplatte des Verkehrsmittels befestigt.

Ein erstes vorderes Gestellbein ist vorteilhafterweise mit einem ersten Ende an einem Bereich des vertikalen Abschnitts des hinteren Gestellbeins, z.B. an einem dem ersten Ende gegenüberliegenden zweiten Ende des vertikalen Abschnitts des hinteren Gestellbeins oberhalb der Grundplatte befestigt. Das vordere Gestellbein verläuft z.B. ausgehend von seinem ersten Ende, vom hinteren Gestellbein weg, nach vorne, z.B. nach unten, insbesondere schräg nach unten und ist mit einem dem ersten Ende gegenüberliegenden zweiten Ende an der Bodenplatte des Verkehrsmittels befestigbar. Z.B. ist das vordere Gestellbein nach vorne unten umgebogen vorhanden. Hierdurch stützt das vordere Gestellbein das hintere Gestellbein ab. Ein zweites vorderes Gestellbein ist bevorzugterweise gleichsam am hinteren Gestellbein angeordnet, wobei die beiden vorderen Gestellbeine zumindest im Bereich der Bodenplatte einen Abstand zueinander aufweisen.

In einer vorteilhaften Modifikation der Vorrichtung sind zwei hintere Gestellbeine vorhanden und jeweils ein vorderes Gestellbein ist an einem hinteren Gestellbein befestigt. Insbesondere ist jeweils ein vorderes Gestellbein mit dem hinteren Gestellbein, vorteilhaft mit jeweils einem hinteren Gestellbein positionsfest und/oder unlösbar verbunden, zum Beispiel verschweißt, vernietet und/oder verschraubt.

Die Gestellbeine sind zum Beispiel als Rohr ausgebildet, insbesondere als Vierkantrohr. Die Gestellbeine sind bevorzugterweise aus Metall, insbesondere aus Stahl ausgestaltet. Bevorzugterweise ist die Vorrichtung eine Schweißkonstruktion.

In einer vorteilhaften Ausgestaltung der Erfindung sind zwei vordere Gestellbeine vorgesehen, wobei die beiden vorderen Gestellbeine L-förmig nach unten umgebogen ausgebildet sind, sodass die Vorrichtung stuhlartig ausgestaltet ist.

Durch die stuhlartige Ausbildung des Gestells, z.B. mit zwei hinteren Gestellbeinen, ist ein insbesondere quaderartiger Bereich zwischen den Gestellbeinen der Vorrichtung vorteilhaft frei und kann im montierten Zustand der Vorrichtung im Fahrzeug z.B. als Stauraum oder zur Unterbringung eines Tanks oder einer Heizung genutzt werden.

Beispielsweise verläuft das vordere Gestellbein ausgehend von seinem ersten Ende am hinteren Gestellbein in einem ersten Abschnitt horizontal, z.B. senkrecht zum hinteren Gestellbein, vom hinteren Gestellbein weg, weist dann eine Abknickung bzw. Umbiegung auf und verläuft in einem zweiten Abschnitt nach der Abknickung vertikal nach unten bis zu seinem zweiten Ende, zum Beispiel parallel zum hinteren Gestellbein. Hierdurch bildet das vordere Gestellbein mit dem hinteren Gestellbein, aus einer seitlichen auf die Vorrichtung, ein nach unten offenes U.

Vorteilhafterweise ist das hintere Gestellbein aus einem Vierkant-Stahlrohr ausgestaltet und ein vorderes Gestellbein beispielsweise aus einem runden Stahlrohr. Hierdurch ist es vorstellbar, dass das vordere Gestellbein z.B. L-förmig nach unten abstehend gebogen ist.

Bei einer vorteilhaften Variante der Erfindung umfasst die Vorrichtung eine Quertraverse, welche insbesondere nachträglich im angeordneten Zustand der Vorrichtung im Verkehrsmittel in Bodennähe an dem wenigstens einen hinteren Gestellbein fixiert ist, wobei die Quertraverse ein Peitschenelement umfasst, welches mit einem ersten Ende an der Quertraverse befestigt ist und an welchem, an einem gegenüberliegenden zweiten Ende, ein Gurtschloss anordenbar ist.

Vorteilhafterweise ist die Quertraverse derart ausgestaltet, dass sie mit der Grundplatte bzw. dem Fahrzeugboden insbesondere direkt verbindbar ist. Vorteilhafterweise ist die Quertraverse im angeordneten Zustand der Vorrichtung an einem oder zwei hinteren Gestellbeinen und an und/oder auf der Grund- bzw. Bodenplatte angeordnet. Hierdurch können bei einem Aufprall bzw. Unfall auftretende Kräfte, insbesondere Kräfte, welche am, an der Quertraverse angeordneten Gurtschloss wirken, beispielsweise über die Quertraverse direkt in den Fahrzeugboden bzw. den Fahrzeugrahmen des Verkehrsmittels geleitet werden.

Das Peitschenelement kann beispielsweise als Kette oder Gurt ausgebildet sein. Vorteilhafterweise besitzt das Peitschenelement eine Länge, sodass das, an das Peitschenelement anordenbare Gurtschloss auf Höhe des Sitzflächenelements anordenbar ist.

Bevorzugterweise ist das Gurtschloss ausschließlich über das Peitschenelement mit der Vorrichtung verbindbar, insbesondere ist das Gurtschloss ausschließlich mit der Vorrichtung verbindbar.

Überdies ist es vorteilhaft, dass das Peitschenelement als ein Flacheisen ausgebildet ist, und im angeordneten Zustand an der Quertraverse vertikal nach oben abstehend vorhanden ist, sodass das am Peitschenelement anordenbare Gurtschloss auf einer Höhe eines Sitzflächenelements des Sitzes vorhanden ist.

Denkbar ist, dass das Flacheisen als sogenanntes Opferblech ausgebildet ist und gegebenenfalls bei einer vergleichsweise hohen Kraftbelastung nachgibt, sich beispielsweise verbiegt, z.B. bei einem Unfall, wenn eine Person mit dem, an die Vorrichtung angeordneten Sicherheitsgurtsystem, gesichert ist. Vorteilhaft erweist sich auch, dass ein Gestellbeinabschnitt eines vorderen Gestellbeins eine Auflage für das Sitzflächenelement des Sitzes bildet.

Bevorzugterweise bildet der erste, horizontale Abschnitt des vorderen Gestellbeins eine Auflage für das Sitzflächenelement. Insbesondere liegt das Sitzflächenelement auf dem ersten, horizontalen Abschnitt des vorderen Gestellbeins auf. Denkbar ist, dass an der Auflage Montageelemente, zum Beispiel Befestigungslöcher, zur Befestigung des Sitzflächenelements vorhanden sind. Die Aufnahme kann auch derart ausgebildet sein, dass das Sitzflächenelement an die Auflage geklemmt oder geschweißt werden kann.

Es ist überdies vorteilhaft, dass die beiden vorderen Gestellbeine durch eine Querverstrebung in Bodennähe miteinander verbunden sind.

Beispielsweise ist die Querverstrebung als U-förmiges Profil ausgebildet, wobei im angeordneten Zustand des Profils an den Gestellbeinen das Profil nach oben offen angeordnet ist, sodass die Gestellbeine im Profil aufstehend ausgebildet sind. Hierdurch sind die Gestellbeine senkrecht zu einer Längsachse des Profils und parallel zu einer Sitzfläche des Sitzes bzw. zur Grundplatte des Verkehrsmittels im angeordneten Zustand der Vorrichtung im Verkehrsmittel durch das Profil gehalten.

Denkbar ist auch, dass mindestens zwei hintere Gestellbeine vorhanden sind und diese durch eine weitere Querverstrebung, insbesondere in Bodennähe, miteinander verbunden sind.

Bevorzugterweise sind die Gestellbeine mit der Querverstrebung fest verbunden, zum Beispiel verschweißt, verschraubt und/oder vernietet. Die Vorrichtung ist beispielsweise über die Querverstrebung mit dem Verkehrsmittel, zum Beispiel der Grund- bzw. Bodenplatte verbunden. Die Querverstrebung ist vorteilhaft mit der Grund- bzw. Bodenplatte fest verbindbar, zum Beispiel verschweißbar, verschraubbar und/oder vernietbar.

Denkbar ist weiterhin, dass die Vorrichtung derart ausgestaltet ist, dass durch die Anbringung der Vorrichtung, insbesondere der Gestellbeine am Verkehrsmittel die Vorrichtung zusätzlich mechanisch stabilisiert ist.

Auch ist es von Vorteil, dass im Bereich einer Umbiegung des stuhlartigen Gestells ein Knieblech vorgesehen ist, um das Gestell zu verstärken.

Bevorzugterweise ist in einem Bereich einer Umbiegung oder Abknickung eines vorderen Gestellbeins ein Knieblech befestigt. Dadurch ist die Vorrichtung zusätzlich mechanisch verstärkt bzw. stabilisiert. Das Knieblech kann auch als schräg verlaufende Strebe ausgebildet sein, so dass die Strebe einen horizontal verlaufenden Abschnitt eines Gestellbeins zu einem vertikal verlaufenden Abschnitt des gleichen oder eines weiteren Gestellbeins abstützt.

Weiter wird vorgeschlagen, dass die Vorrichtung in einem oberen Bereich eine Lehne aufweist, wobei die Lehne eine Aufnahme zur Anordnung einer Kopfstütze besitzt.

Vorteilhafterweise bildet das hintere Gestellbein, insbesondere bilden zwei hintere Gestellbeine zumindest einen Teil der Lehne. Insbesondere erstreckt sich das oder die hinteren Gestellbeine säulenartig in vertikaler Richtung entlang zumindest einem Großteil einer vertikalen Ausdehnung der Vorrichtung. Hierdurch ist es vorstellbar, dass die Aufnahme zur Anordnung einer Kopfstütze am hinteren Gestellbein ausgebildet ist.

Die Aufnahme ist beispielsweise hülsenartig ausgeformt, so dass eine stift- oder bolzenförmiges Verbindungselement einer Kopfstütze in die hülsenartige Aufnahme eingesteckt oder eingeschoben werden und mit der Aufnahme verbunden werden kann. Die Aufnahme kann auch als Loch und/oder Gewinde ausgebildet sein, sodass die Kopfstütze mittels der Aufnahme an die Vorrichtung anschraubbar ist.

Überdies von Vorteil ist, dass an der Lehne ein Galgen vorhanden ist, welcher dazu ausgebildet ist, eine Kopfstütze anzuordnen.

Der Galgen ist beispielsweise horizontal und senkrecht zu einem bzw. den hinteren Gestellbeinen an dem bzw. den hinteren Gestellbeinen befestigt, z.B. angeschraubt und/oder geschweißt.

Vorteilhafterweise ist die Vorrichtung, insbesondere der Galgen dazu ausgebildet, zwei Kopfstützen und/oder zwei Sicherheitsgurtsysteme anzuordnen, beispielsweise drei Kopfstützen und/oder drei Sicherheitsgurtsysteme.

Des Weiteren ist es von Vorteil, dass ein oberer Abschnitt eines vorderen Gestellbeins parallel zu einem insbesondere oberen Abschnitt eines hinteren Gestellbeins am hinteren Gestellbein angeordnet ist.

Beispielsweise ist ein oberer Abschnitt eines vorderen Gestellbeins im Bereich des Sitzflächenelements des Sitzes und/oder der Lehne der Vorrichtung am hinteren Gestellbein befestigt. Vorteilhafterweise umfasst ein vorderes Gestellbein drei Abschnitte, zwei vertikale und einen horizontalen und zwei Abknickungen. So verläuft das vordere Gestellbein z.B. ausgehend von seinem ersten Ende am hinteren Gestellbein in einem ersten Drittel zunächst vertikal und parallel zum hinteren Gestellbein am hinteren Gestellbein von oben nach unten, umfasst dann eine Abknickung oder Umbiegung, so dass es mit einem zweiten Drittel horizontal, z.B. senkrecht zum hinteren Gestellbein, vom hinteren Gestellbein weg verläuft, um dann nach einer weiteren Abknickung bzw. Umbiegung mit seinem dritten Drittel nach der Abknickung vertikal nach unten, zum Beispiel parallel zum hinteren Gestellbein bis zu seinem zweiten Ende zu verlaufen.

Vorteilhafterweise ist das erste Gestellbein im Bereich seines ersten Drittels fest mit dem hinteren Gestellbein verbunden. Die beiden vorderen Gestellbeine sind beispielsweise an sich gegenüberliegenden äußeren Bereichen des oder der hinteren Gestellbeine befestigt.

### Beschreibung des Ausführungsbeispiels

Weitere Merkmale und Vorteile der Erfindung sind anhand eines schematisiert dargestellten erfindungsgemäßen Ausführungsbeispiels näher erläutert. Im Einzelnen zeigen:
- Figur 1: eine perspektivische Ansicht von seitlich vorne oben auf eine erfindungsgemäße Vorrichtung,
- Figur 2: eine seitliche Ansicht auf ineinander gestellte Vorrichtungen nach Figur 1,
- Figur 3: eine Ansicht von vorne auf die ineinander gestellten Vorrichtungen nach Figur 2,
- Figur 4: eine perspektivische Ansicht von seitlich vorne oben auf die ineinander gestellten Vorrichtungen nach Figur 2 und
- Figur 5: eine Ansicht von oben auf die ineinander gestellten Vorrichtungen nach Figur 2, welche auf einer Europalette platziert sind.

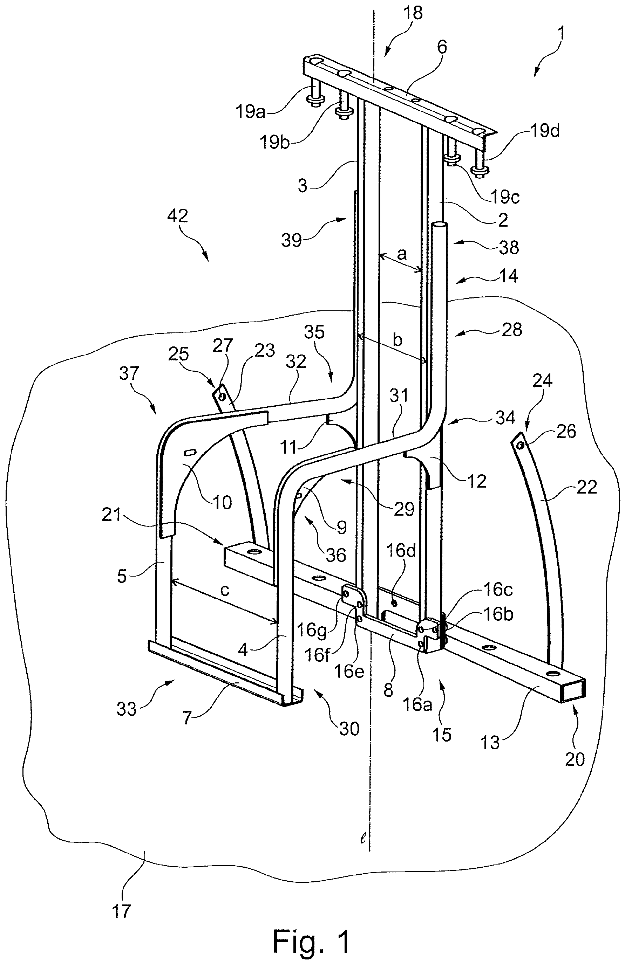

Eine erfindungsgemäße Vorrichtung 1 in Form eines stuhlförmigen Gestells 42 umfasst zwei vertikal angeordnete hintere Gestellbeine 2, 3, zwei insbesondere auseinanderlaufende angeordnete vordere Gestellbeine 4, 5, einen Galgen 6, Querverstrebungen 7, 8, Kniebleche 9 bis 12 und eine Quertraverse 13 (Figur 1).

Die hinteren Gestellbeine 2, 3 der Vorrichtung 1 sind z.B. aus einem Vierkantstahlrohr ausgebildet und stehen insbesondere säulenartig senkrecht nach oben ab. Außerdem sind die hinteren Gestellbeine 2, 3 parallel angeordnet und besitzen einen Abstand a zueinander. In einem oberen Bereich bilden die hinteren Gestellbeine 2, 3 eine Lehne 14 des stuhlartigen Gestells 42. An einem unteren Ende 15 der hinteren Gestellbeine 2, 3 sind die hinteren Gestellbeine 2, 3 über die plattenartige Querverstrebung 8 fest miteinander verbunden. Beispielsweise umschließt die Querverstrebung 8 die hinteren Gestellbeine 2, 3 bandartig. Des Weiteren umfasst die Querverstrebung 8 Befestigungsorgane, zum Beispiel Befestigungslöcher 16a bis 16g, die dazu vorgesehen sind, die Vorrichtung 1 über die Querverstrebung 8 mit einer Grundplatte 17 eines Fahrzeugs (nicht gezeigt) im montierten Zustand im Fahrzeug fest zu verbinden.

Zusätzlich zur Querverstrebung 8 ist am unteren Ende 15 der hinteren Gestellbeine 2, 3 die Quertraverse 13 z.B. lösbar mit den Gestellbeinen 2, 3 und/oder der Querverstrebung 8 und/oder der Grundplatte 17 verschraubt. Die Quertraverse 13 ist zum Beispiel als Vierkantstahlrohr ausgebildet und senkrecht zu den Gestellbeinen 2, 3 und im montierten Zustand der Vorrichtung 1 im Fahrzeug parallel zur Grundplatte 17 von den Gestellbeinen 2, 3 abstehend vorhanden. An gegenüberliegenden Enden 20, 21 der Quertraverse 13 ist nach oben, in Richtung Galgen 6 bzw. oberem Ende 18 der Gestellbeine 2, 3 abstehend jeweils ein leistenartiges Peitschenelement 22, 23 mit der Quertraverse 13 fest verbunden, zum Beispiel verschweißt, vernietet oder verschraubt. Die Peitschenelemente 22, 23 sind zum Beispiel als Metallstreifen vorhanden und sind derart nach oben abstehende an der Quertraverse 13 befestigt, dass sich ein Ende 24, 25 der Peitschenelemente 22, 23 auf Höhe einer an der Vorrichtung 1 anordenbaren Sitzfläche eines Fahrzeugsitzes (nicht gezeigt) befindet. Die Peitschenelemente 22, 23 besitzen somit zum Beispiel ein Drittel der Länge der Gestellbeine 2, 3, insbesondere bis zu einer Hälfte der Länge der Gestellbeine 2, 3 entlang einer Längsachse 1. An den Enden 24, 25 der Peitschenelement 22, 23 sind Befestigungsmittel 26, 27 zum Beispiel in Form von Befestigungslöchern zur Anordnung eines Gurtschloss (nicht gezeigt) vorhanden.

An einem oberen Ende 18 der hinteren Gestellbeine 2, 3 verbindet ein Galgen 6 die hinteren Gestellbeine 2, 3. Der Galgen 6 ist als L-förmiges Profil ausgestaltet und ist senkrecht zu den hinteren Gestellbeinen 2, 3 und parallel zur Grundplatte 17 des Fahrzeugs vorhanden. Beispielsweise ist der Galgen 6 mit den Gestellbeinen 2, 3 fest verbunden, insbesondere verschweißt. Am Galgen 6 sind Aufnahmen in Form von rohrförmigen Montageorganen 19a bis 19d ausgebildet, an welche Kopfstützen (nicht gezeigt) montiert, z.B. eingesetzt bzw. eingeschoben werden können.

Die vorderen Gestellbeine 4, 5 der Vorrichtung 1 sind beispielsweise aus einem gebogenen Metallrohr ausgebildet. Die vorderen Gestellbeine 4, 5 können in drei, etwa gleich lange Bereiche eingeteilt werden. Einen ersten, vertikal verlaufenden oberen Bereich 28, einen zweiten, horizontal verlaufenden mittleren Bereich 29 und eine dritten, vertikal verlaufenden unteren Bereich 30. Entlang des oberen Bereichs 28 verlaufen die vorderen Gestellbeine 4, 5 parallel und anliegend zu den hinteren Gestellbeinen 2, 3 und sind mit diesen zum Beispiel verschweißt. Insbesondere sind die vorderen Gestellbeine 4, 5 an sich gegenüberliegenden Außenseiten 38, 39 der hinteren Gestellbeine 2, 3 befestigt.

Die vorderen Gestellbeine 4, 5 sind im Übergangsbereich 34, 35 vom ersten, oberen Bereich 28 zum zweiten, mittleren Bereich 29 umgebogen, sodass der mittlere Bereich 29 der vorderen Gestellbeine 4, 5 senkrecht zu den hinteren Gestellbeinen 2, 3 von den Gestellbeinen 2, 3 weg, nach vorne verläuft. Auf einer Oberseite der Gestellbeine 4, 5 im mittleren Bereich 29 sind die Gestellbeine 4, 5 als Aufnahme 31, 32 für ein Sitzflächenelement (nicht gezeigt) ausgebildet. Beispielsweise kann das Sitzflächenelement auf die Gestellbeine 4, 5 an den Aufnahmen 31, 32 geklipst und/oder angeschraubt werden.

Im Übergangsbereich 36, 37 vom zweiten, mittleren Bereich 29 zum dritten, unteren Bereich 30 sind die vorderen Gestellbeine 4, 5 nach unten, in Richtung Grundplatte 17 im angeordneten Zustand im Fahrzeug umgebogen. Hierdurch bildet das vordere Gestellbein 4 bzw. 5 mit dem hinteren Gestellbein 2 bzw. 3 aus einer seitlichen Sicht ein nach unten offenes U aus. Am unteren Ende 33 der vorderen Gestellbeine 4, 5 sind die vorderen Gestellbeine 4, 5 über die Querverstrebung 7, welche als ein nach oben offenes Profil ausgebildet ist, miteinander verbunden. Beispielsweise sind die vorderen Gestellbeine 4, 5 über die Querverstrebung 7 mit der Grundplatte 17 des Fahrzeugs verbindbar.

An den Biegungen bzw. Abknickungen der Gestellbeine 4, 5 an den Übergangsbereichen 34, 35 und/oder 36, 37 sind zur Verstärkung bzw. Stabilisierung der Vorrichtung 1 Kniebleche 11, 12 bzw. 9, 10 vorgesehen. Die Kniebleche 9 bis 12 sind beispielsweise an die Gestellbeine 2 bis 5 angeschweißt.

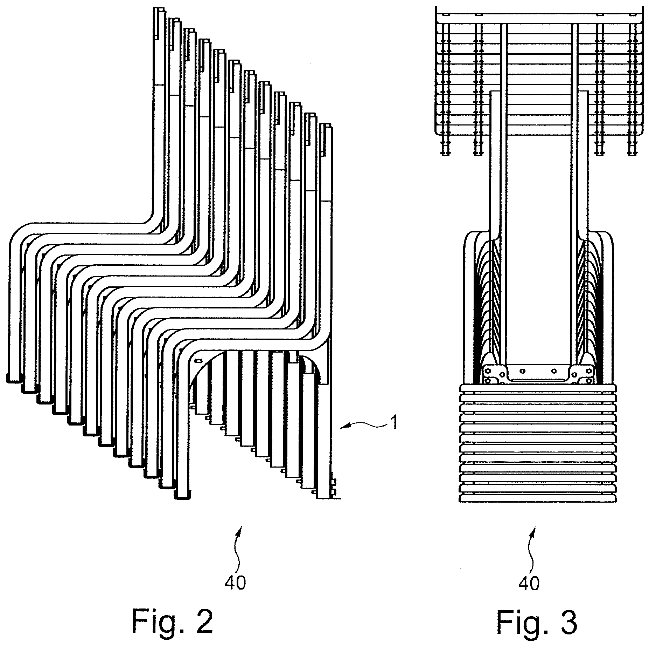

Die vorderen Gestellbeine 4, 5 sind derart an der Vorrichtung 1 vorhanden, dass sie ausgehend von den hinteren Gestellbeinen 2, 3 nach vorne, weg von den hinteren Gestellbeine 2, 3 ihren Abstand zueinander vergrößern. Hierdurch ist die Vorrichtung 1 stapelbar, sodass eine Vorrichtung 1 in eine weitere Vorrichtung gestellt werden kann (Figuren 2 bis 5). Beispielsweise weisen die vorderen Gestellbeine 4, 5 am ersten, oberen Bereich der Gestellbeine 4, 5 einen Abstand b zueinander auf und am dritten, unteren Bereich der Gestellbeine 4, 5 einen Abstand c zueinander auf, wobei der Abstand c größer ist, als der Abstand b (Figur 1).

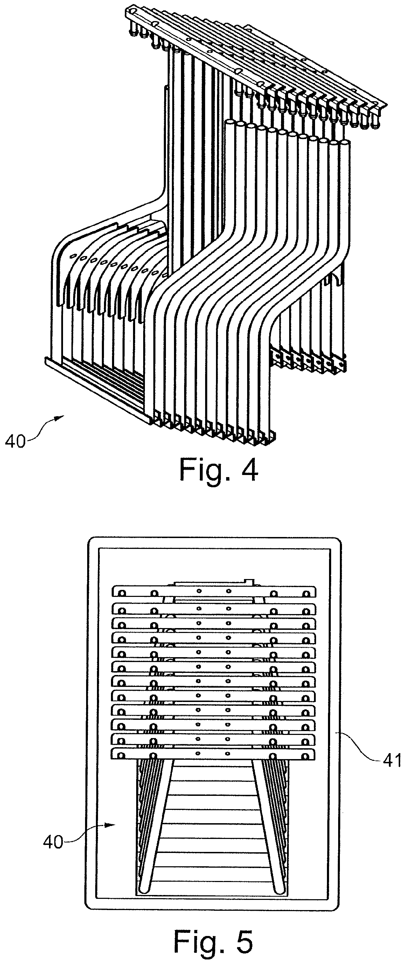

In den Figuren 2 bis 5 sind Stapel 40 von ineinander gestapelte bzw. gestellte erfindungsgemäßen Vorrichtungen 1 aus unterschiedlichen Perspektiven gezeigt. Insbesondere ist der Figur 5 zu entnehmen, dass der Stapel 40, bestehend aus insbesondere mindestens zwölf erfindungsgemäßen Vorrichtungen 1 auf einer Europalette 41 derart angeordnet werden kann, dass der Stapel 40 vollständig und insbesondere passgenau auf der Europalette 41 Platz findet.

### Bezugszeichenliste

- 1: Vorrichtung
- 2 - 5: Gestellbein
- 6: Galgen
- 7 - 8: Querverstrebung
- 9 - 12: Kniebleche
- 13: Quertraverse
- 14: Lehne
- 15: Ende
- 16a - 16g: Befestigungsorgan
- 17: Grundplatte
- 18: Ende
- 19a - 19d: Montageorgan
- 20 - 21: Ende
- 22 - 23: Peitschenelement
- 24 - 25: Ende
- 26 - 27: Befestigungsloch
- 28 - 30: Bereich
- 31 - 32: Aufnahme
- 33: Ende
- 34 - 37: Übergangsbereich
- 38 - 39: Außenseite
- 40: Stapel
- 41: Europalette
- 42: Gestell

## Patentansprüche

1. Vorrichtung (1) zur Anbringung eines Sicherheitsgurtsystems, insbesondere eines Dreipunktgurt-Sicherheitssystems, für einen Sitz in einem Verkehrsmittel, insbesondere in einem Wohnmobil, wobei die Vorrichtung (1) mindestens ein hinteres Gestellbein (2, 3) umfasst, welches sich im angeordneten Zustand am Verkehrsmittel von einer Grundplatte (17) in vertikaler Richtung nach oben erstreckt und wobei die Vorrichtung (1) zumindest ein vorderes Gestellbein (4, 5) aufweist, welches das zumindest eine hintere Gestellbein (2, 3) abstützt, **dadurch gekennzeichnet, dass** zwei vordere Gestellbeine (4, 5) vorgesehen sind, deren Abstand zueinander sich ausgehend von dem hinteren Gestellbein (2, 3) in einer Richtung nach vorne vergrößert.

2. Vorrichtung (1) zur Anbringung eines Sicherheitsgurtsystems nach dem Oberbegriff des Anspruchs 1, insbesondere nach Anspruch 1, **dadurch gekennzeichnet, dass** zwei vordere Gestellbeine (4, 5) vorgesehen sind, wobei die beiden vorderen Gestellbeine L-förmig nach unten umgebogen ausgebildet sind, sodass die Vorrichtung (1) stuhlartig ausgestaltet ist.

3. Vorrichtung (1) zur Anbringung eines Sicherheitsgurtsystems nach dem Oberbegriff des Anspruchs 1, insbesondere nach einem der vorangegangenen Ansprüche, **dadurch gekennzeichnet, dass** die Vorrichtung (1) eine Quertraverse (13) umfasst, welche insbesondere nachträglich im angeordneten Zustand der Vorrichtung (1) im Verkehrsmittel in Bodennähe an dem wenigstens einen hinteren Gestellbein (2, 3) fixiert ist, wobei die Quertraverse (13) ein Peitschenelement (22, 23) umfasst, welches mit einem ersten Ende an der Quertraverse (13) befestigt ist und an welchem, an einem gegenüberliegenden zweiten Ende (24, 25) ein Gurtschloss anordenbar ist.

4. Vorrichtung (1) zur Anbringung eines Sicherheitsgurtsystems nach Anspruch 3, **dadurch gekennzeichnet, dass** das Peitschenelement (22, 23) als ein Flacheisen ausgebildet ist und im angeordneten Zustand an der Quertraverse (13) vertikal nach oben abstehend vorhanden ist, sodass das am Peitschenelement (22, 23) anordenbare Gurtschloss auf einer Höhe eines Sitzflächenelements des Sitzes vorhanden ist.

5. Vorrichtung (1) zur Anbringung eines Sicherheitsgurtsystems nach einem der vorangegangenen Ansprüche, **dadurch gekennzeichnet, dass** ein Gestellbeinabschnitt (29) eines vorderen Gestellbeins (4, 5) eine Auflage (31, 32) für das Sitzflächenelement des Sitzes bildet.

6. Vorrichtung (1) zur Anbringung eines Sicherheitsgurtsystems nach einem der vorangegangenen Ansprüche, **dadurch gekennzeichnet, dass** die beiden vorderen Gestellbeine (4, 5) durch eine Querverstrebung (7) in Bodennähe miteinander verbunden sind.

7. Vorrichtung (1) zur Anbringung eines Sicherheitsgurtsystems nach einem der vorangegangenen Ansprüche, **dadurch gekennzeichnet, dass** im Bereich einer Umbiegung (34 - 37) des stuhlartigen Gestells (42) ein Knieblech (9 - 12) vorgesehen ist, um das Gestell (42) zu verstärken.

8. Vorrichtung (1) zur Anbringung eines Sicherheitsgurtsystems nach einem der vorangegangenen Ansprüche, **dadurch gekennzeichnet, dass** die Vorrichtung (1) in einem oberen Bereich eine Lehne (14) aufweist, wobei die Lehne (14) eine Aufnahme zur Anordnung einer Kopfstütze besitzt.

9. Vorrichtung (1) zur Anbringung eines Sicherheitsgurtsystems nach einem der vorangegangenen Ansprüche, **dadurch gekennzeichnet, dass** an der Lehne (14) ein Galgen (6) vorhanden ist, welcher dazu ausgebildet ist, eine Kopfstütze anzuordnen.

10. Vorrichtung (1) zur Anbringung eines Sicherheitsgurtsystems nach einem der vorangegangenen Ansprüche, **dadurch gekennzeichnet, dass** ein oberer Abschnitt (28) des vorderen Gestellbeins (4, 5) parallel zu einem insbesondere oberen Abschnitt des hinteren Gestellbeins (2, 3) am hinteren Gestellbein (2, 3) angeordnet ist

11. Fahrzeugsitz mit einer Vorrichtung (1) nach einem der vorangegangen Ansprüche.

12. Verkehrsmittel mit einem Fahrzeugsitz nach Anspruch 11 oder einer Vorrichtung (1) nach einem der vorangegangenen Ansprüche.
